# DEMANDE DE BREVET EUROPEEN

(11) **EP 4 675 128 A1**
(43) Date de publication de la demande: **07.01.2026**
(21) Numéro de dépôt: 25176765.3
(22) Date de dépôt: 15.05.2025
(51) Int. Cl.: F16G 11/14, A63B 29/02, B66C 1/12, D07B 1/18, F16G 15/12

(54) **CONNECTEUR DE DÉGAINE, DÉGAINE ET PROCÉDÉ DE FABRICATION**

(30) Priorité: 04.07.2024 FR 2407302
(71) Demandeur: Zedel, 38920 Crolles (FR)
(72) Inventeur: BLONDEAU, Loïc, 38700 LA TRONCHE (FR)
(74) Mandataire: Talbot, Alexandre

(57) **Abrégé**

Un connecteur de dégaine comporte un bobinage d'un élément filaire (1). Un premier élément tubulaire (2) entoure le bobinage et s'étend selon une direction longitudinale de l'élément filaire (1). Un élément tubulaire additionnel (5) est disposé autour du bobinage pour former une gaine additionnelle. Le bobinage s'échappe à chacune des deux extrémités opposées de l'élément tubulaire additionnel (5) pour définir un premier anneau (6) et un deuxième anneau (7) destinés à recevoir un mousqueton. Le deuxième anneau (7) est séparé du premier anneau (6) par la gaine additionnelle. La première gaine entoure continument le bobinage le long du premier anneau (6) et du deuxième anneau (7) pour définir une gaine de premier anneau et une gaine de deuxième anneau.

## Description

### Domaine technique

L'invention concerne un connecteur de dégaine, une dégaine et un procédé de fabrication d'un tel connecteur de dégaine.

### État de la technique

En alpinisme et dans d'autres activités de montagne, il est courant d'utiliser des dégaines qui s'accrochent à un point d'ancrage et qui sont destinées à recevoir une corde. La dégaine possède deux mousquetons qui sont reliés par un connecteur souple.

Le connecteur souple définit deux anneaux distincts et séparés d'une distance prédéfinie. Chacun des deux anneaux reçoit un mousqueton, mais il est possible d'y installer un autre type d'élément d'ancrage selon les besoins.

De manière classique, le connecteur est formé par une sangle qui est repliée plusieurs fois pour définir deux boucles opposées selon la direction longitudinale du connecteur. Les multiples épaisseurs de sangle sont fixées les unes aux autres par couture. Un tel enseignement est illustré dans les documents USD747176 et US20180001144.

Un enseignement sensiblement équivalent est présent dans le document US 8,973,509 qui propose d'utiliser un matériau tissé tubulaire qui est replié autour de sa partie centrale creuse afin de former un anneau creux. L'anneau est déformé afin de définir deux boucles opposées séparées par une portion intermédiaire où deux épaisseurs du matériau tissé replié sont mises en contact et sont fixées par couture.

Le document US 2015/0352407 propose une autre configuration d'anneau où un fil est enroulé sous la forme d'un bobinage. Les multiples tours du bobinage sont enfermés dans une bande de matériau textile qui est repliée selon la direction longitudinale et cousue pour former un tube autour du bobinage. Les deux extrémités du tube sont fixées l'une à l'autre afin d'enfermer le bobinage à l'intérieur d'une gaine formée par la bande de matériau textile. Le matériau tissé tubulaire ne définit plus les performances mécaniques de l'anneau, ces dernières sont principalement définies par les multiples boucles qui sont installées à l'intérieur de l'anneau.

Le document US 5,727,833 divulgue une élingue définissant deux anneaux opposés. Une sangle est agencée sous la forme d'un anneau avec deux gaines distinctes aux deux extrémités opposées de l'anneau. L'ensemble est introduit dans un capot de sorte que l'anneau définisse deux anneaux où la sangle est protégée par les deux gaines distinctes.

Le document US 2004/0115390 divulgue un absorbeur de chute possédant deux anneaux connectés par un élément déformable élastiquement. Les deux anneaux se rapprochent ou s'éloignent selon la déformation de l'élément déformable élastiquement. Les deux anneaux sont reliés par une gaine de protection et l'élément déformable élastiquement est installé à l'intérieur de la gaine de protection.

### Exposé de l'invention

Un objet de l'invention consiste à fournir un connecteur de dégaine qui présente un meilleur compromis entre la compacité, la souplesse et la résistance en traction que les configurations de l'art antérieur.

On tend à atteindre ce résultat au moyen d'un connecteur de dégaine comportant :
- un bobinage d'un élément filaire comportant des premiers tours dudit élément filaire, le bobinage étant divisé en un premier brin et un deuxième brin disposés consécutivement selon une direction longitudinale de l'élément filaire ;
- au moins un premier élément tubulaire entourant lesdits premiers tours pour former au moins une première gaine autour du bobinage, ledit au moins un premier élément tubulaire étant traversé par les premiers tours et s'étendant selon une direction longitudinale de l'élément filaire.

Le connecteur de dégaine est remarquable en ce qu'un élément tubulaire additionnel est disposé autour du bobinage pour former une gaine additionnelle ; en ce que l'élément tubulaire additionnel entoure l'ensemble formé par le premier brin et le deuxième brin disposés adjacents selon une direction perpendiculaire à la direction longitudinale ;
en ce que le bobinage s'échappe à chacune des deux extrémités opposées de l'élément tubulaire additionnel pour définir un premier anneau avec un premier trou traversant destiné à recevoir un premier mousqueton et un deuxième anneau avec un deuxième trou traversant destiné à recevoir un deuxième mousqueton, le deuxième anneau étant séparé du premier anneau par l'élément tubulaire additionnel; et
en ce que ledit au moins un premier élément tubulaire entoure continument le bobinage le long du premier anneau et du deuxième anneau pour définir une gaine de premier anneau et une gaine de deuxième anneau, chaque extrémité de la gaine de premier anneau et de la gaine de deuxième anneau étant au contact de l'élément tubulaire additionnel.

Selon un aspect de l'invention, le au moins un premier élément tubulaire recouvre partiellement les premiers tours du bobinage selon la direction longitudinale de l'élément filaire, une portion du bobinage non recouverte par le au moins un premier élément tubulaire étant disposée entre la gaine de premier anneau et la gaine de deuxième anneau et recouverte par l'élément tubulaire additionnel.

De manière préférentielle, le au moins un premier élément tubulaire est discontinu de sorte que la gaine de premier anneau et la gaine de deuxième anneau sont séparées par une portion du bobinage non-recouverte le long du premier brin et une portion non-recouverte le long du deuxième brin, les portions du bobinage non-recouvertes par la au moins une première gaine étant recouvertes par l'élément tubulaire additionnel.

Avantageusement, le au moins un premier élément tubulaire est fixé à l'élément tubulaire additionnel par des coutures.

Dans un mode de réalisation particulier, le premier brin et le deuxième brin sont chacun dépourvus de recouvrement par la au moins une première gaine entre les coutures le long du premier brin et du deuxième brin.

Préférentiellement, le au moins un premier élément tubulaire s'étend continument du premier anneau jusqu'au deuxième anneau. Le au moins un premier élément tubulaire possède un premier motif d'enchevêtrement formant la gaine de premier anneau qui est différent d'un deuxième motif d'enchevêtrement disposé entre le bobinage et l'élément tubulaire additionnel.

De manière avantageuse, les premiers tours d'élément filaire du bobinage sont dépourvus d'un nœud entre les deux extrémités de l'élément filaire pour former un anneau fermé.

L'invention a également pour objet une dégaine qui présente un meilleur compromis entre la compacité, la souplesse et la résistance en traction entre les deux mousquetons que les configurations de l'art antérieur.

On tend à résoudre ce résultat au moyen d'une dégaine comportant un connecteur de dégaine selon l'une quelconque des configurations précédentes, un premier mousqueton installé dans le premier anneau et un deuxième mousqueton installé dans le deuxième anneau.

L'invention a également pour objet un procédé de fabrication d'un connecteur de dégaine qui est simple à mettre en œuvre et qui permet de former un connecteur de dégaine présentant un meilleur compromis entre la compacité, la souplesse et la résistance en traction que les configurations de l'art antérieur.

On tend à atteindre ce résultat au moyen d'un procédé de fabrication d'un connecteur de dégaine comportant les étapes suivantes :
- fournir un élément filaire, au moins un premier élément tubulaire et un élément tubulaire additionnel ;
- bobiner l'élément filaire pour former des premiers tours dudit élément filaire, l'élément filaire passant à travers une portion centrale du au moins un premier élément tubulaire à chaque tour pour que ledit au moins un premier élément tubulaire forme au moins une première gaine autour des premiers tours de l'élément filaire ;
- installer le bobinage d'élément filaire dans l'élément tubulaire additionnel, le bobinage s'échappant à chacune des extrémités de l'élément tubulaire additionnel pour définir un premier anneau destiné à recevoir un premier mousqueton et un deuxième anneau destiné à recevoir un deuxième mousqueton, le deuxième anneau étant séparé du premier anneau par l'élément tubulaire additionnel ;
dans lequel ledit au moins un premier élément tubulaire entoure les premiers tours depuis l'élément tubulaire additionnel jusqu'à l'élément tubulaire additionnel le long du premier anneau et du deuxième anneau.

De manière avantageuse, le au moins un premier élément tubulaire comporte un premier élément tubulaire principal et un premier élément tubulaire secondaire distinct du premier élément tubulaire principal. Durant bobiner l'élément filaire pour former les premiers tours, l'élément filaire passe à travers le premier élément tubulaire principal et le premier élément tubulaire secondaire. Le premier élément tubulaire principal recouvre les premiers tours le long du premier anneau et le premier élément tubulaire secondaire recouvre les premiers tours le long du deuxième anneau

Préférentiellement, le au moins un premier élément tubulaire comporte un premier élément tubulaire principal et un premier élément tubulaire secondaire relié au premier élément tubulaire principal par une portion sécable. Après avoir bobiné l'élément filaire pour former les premiers tours, le premier élément tubulaire principal est séparé du premier élément tubulaire secondaire. Le premier élément tubulaire principal recouvre les premiers tours le long du premier anneau et le premier élément tubulaire secondaire recouvre les premiers tours le long du deuxième anneau.

### Description des dessins

D'autres avantages et caractéristiques ressortiront plus clairement de la description qui va suivre de modes particuliers de réalisation et de mise en œuvre de l'invention donnés à titre d'exemples non limitatifs et représentés aux dessins annexés, dans lesquels :

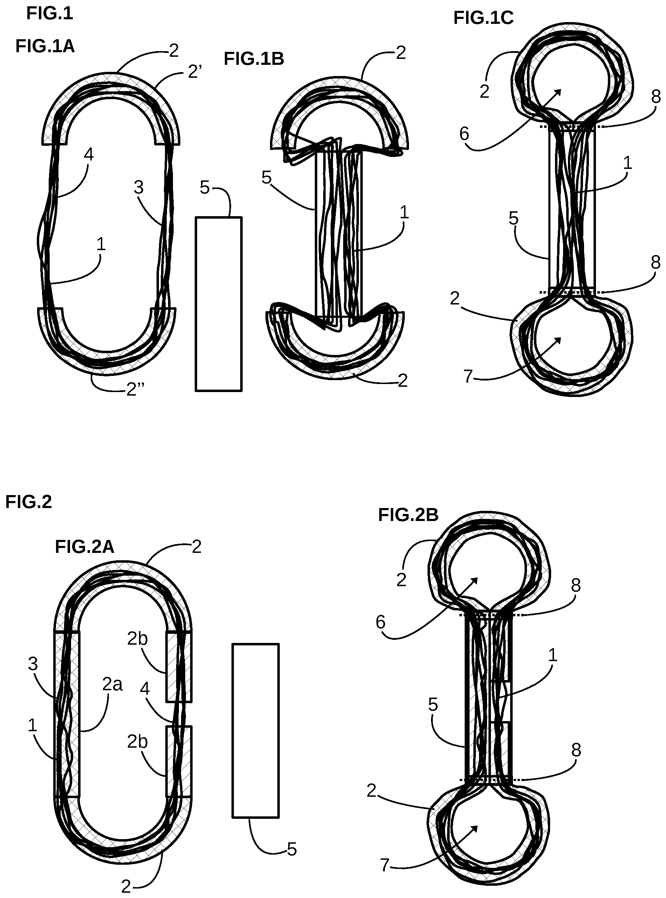

- la figure 1 illustre une vue schématique des étapes de fabrication d'un premier mode de réalisation d'un connecteur de dégaine où le bobinage d'élément filaire et l'élément tubulaire additionnel sont séparés (figure 1A), le bobinage est introduit dans l'élément tubulaire additionnel (figure 1B), les gaines de premier anneau et de deuxième anneau s'étendent jusqu'à l'élément tubulaire additionnel (figure 1C) ;
- la figure 2 illustre une vue schématique des étapes de fabrication d'un deuxième mode de réalisation d'un connecteur de dégaine où le bobinage d'élément filaire et l'élément tubulaire additionnel sont séparés (figure 2A), les gaines de premier anneau et de deuxième anneau s'étendent jusqu'à l'élément tubulaire additionnel (figure 2B) ;

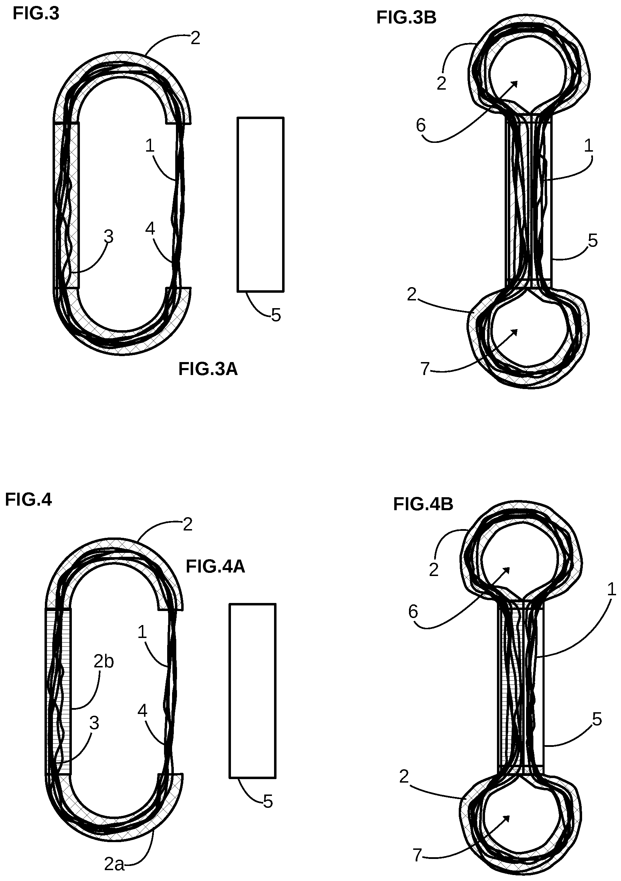

- la figure 3 illustre une vue schématique des étapes de fabrication d'un troisième mode de réalisation d'un connecteur de dégaine où le bobinage d'élément filaire et l'élément tubulaire additionnel sont séparés (figure 3A), les gaines de premier anneau et de deuxième anneau s'étendent jusqu'à l'élément tubulaire additionnel (figure 3B) ;
- la figure 4 illustre une vue schématique des étapes de fabrication d'un quatrième mode de réalisation d'un connecteur de dégaine où le bobinage d'élément filaire et l'élément tubulaire additionnel sont séparés (figure 4A), les gaines de premier anneau et de deuxième anneau s'étendent jusqu'à l'élément tubulaire additionnel (figure 4B) ;

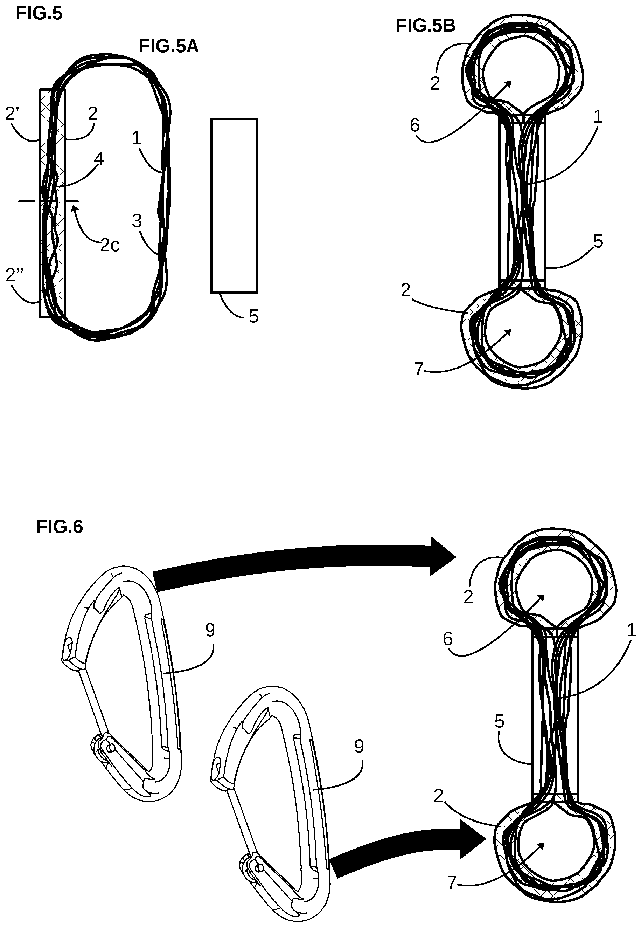

- la figure 5 illustre une vue schématique des étapes de fabrication d'un cinquième mode de réalisation d'un connecteur de dégaine où le bobinage d'élément filaire et l'élément tubulaire additionnel sont séparés (figure 5A), les gaines de premier anneau et de deuxième anneau s'étendent jusqu'à l'élément tubulaire additionnel (figure 5B) ;
- la figure 6 illustre une vue schématique d'une dégaine munie de deux mousquetons et d'un connecteur de dégaine ;

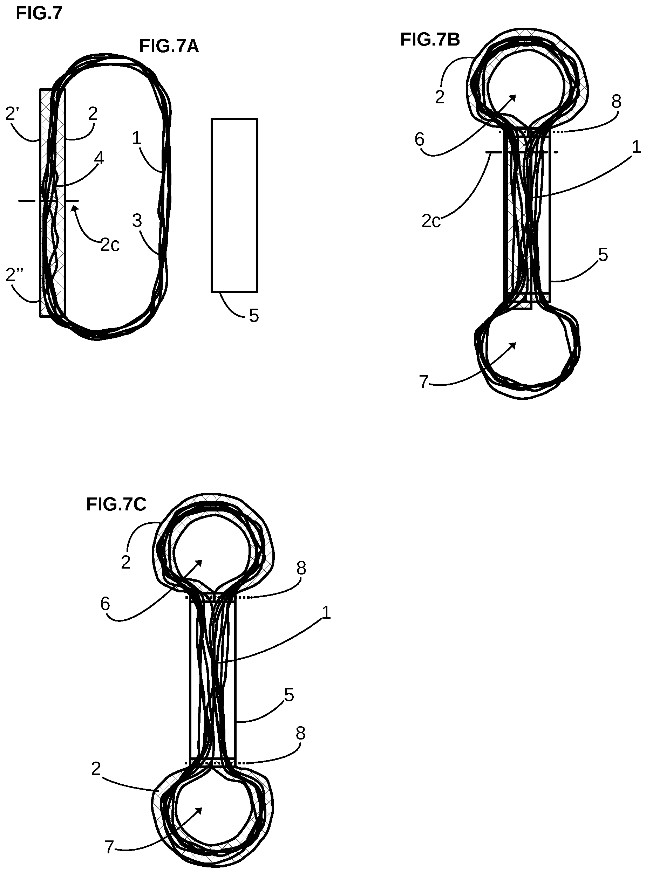

- la figure 7 illustre une vue schématique des étapes de fabrication d'un sixième mode de réalisation d'un connecteur de dégaine où le bobinage d'élément filaire et l'élément tubulaire additionnel sont séparés (figure 5A), la gaine de premier anneau s'étend jusqu'à l'élément tubulaire additionnel (figure 5B) et la gaine de deuxième anneau s'étend jusqu'à l'élément tubulaire additionnel (figure 5C).

### Description détaillée

Les figures 1 à 5 et 7 illustrent différents modes de réalisation d'un connecteur pour dégaine. Le connecteur pour dégaine possède un élément filaire 1 qui est bobiné afin de définir un bobinage possédant des premiers tours d'élément filaire 1. Les tours d'élément filaire 1 sont sous la forme de boucles qui sont disposées les unes sur les autres pour définir un anneau. Par exemple, le bobinage comporte au moins 10 tours ou au moins 20 tours. L'élément filaire 1 peut être une corde, une sangle, une tresse, une fibre continue ou tout autre fil ou fibre adapté. Par exemple, l'élément filaire 1 est un fil réalisé en dyneema ^{®}.

L'élément filaire 1 s'étend continument pour définir les multiples boucles. Le bobinage formé par les multiples boucles peut être divisé en un premier brin et un deuxième brin. Par exemple, le bobinage est divisé en deux moitiés, chaque moitié représente un brin du bobinage. Selon les modes de réalisation, le premier brin et le deuxième brin comportent le même nombre d'éléments filaires ou une différence qui représente un tour d'élément filaire. Le premier brin 3 et le deuxième brin 4 sont disposés consécutivement selon une direction longitudinale de l'élément filaire 1.

Le connecteur pour dégaine possède au moins un premier élément tubulaire 2 qui entoure uniquement lesdits premiers tours. Le au moins un premier élément tubulaire 2 s'étend selon la direction longitudinale de l'élément filaire 1 pour former au moins une première gaine autour des premiers tours de l'élément filaire 1. En d'autres termes, le au moins un premier élément tubulaire 2 suit la forme de l'anneau ou d'une partie de l'anneau. Selon les modes de réalisation, la au moins une première gaine recouvre tout le bobinage ou seulement une partie du bobinage selon la direction longitudinale de l'élément filaire 1.

La au moins une première gaine ne comporte qu'une seule fois les premiers tours, c'est-à-dire que la première gaine suit la forme du bobinage et ou la partie du bobinage qu'elle recouvre. La au moins une première gaine n'est pas agencée pour recevoir ensemble le premier brin 3 et le deuxième brin 4 disposés adjacents et perpendiculairement à la direction longitudinale de l'élément filaire 1, c'est-à-dire un volume correspondant à un doublement des éléments filaires 1.

Le au moins un premier élément tubulaire 2 est destiné à former une gaine autour des multiples boucles de l'élément filaire 1 prises comme un ensemble. Le au moins un premier élément tubulaire 2 protège l'élément filaire 1 des agressions extérieures.

Par élément tubulaire 2, on entend préférentiellement, un élément qui est intrinsèquement tubulaire, c'est-à-dire sans opération de collage, couture, soudure ou autre. Le au moins un premier élément tubulaire 2 est préférentiellement choisi parmi une sangle tubulaire, c'est-à-dire un élément tissé tubulaire ou il peut s'agir d'une tresse tubulaire ou encore d'un tricot tubulaire. L'utilisation d'un élément intrinsèquement tubulaire permet d'avoir un meilleur compromis entre compacité et souplesse.

**Il** est particulièrement avantageux que le volume interne du au moins un premier élément tubulaire 2 soit majoritairement rempli par les multiples tours de l'élément filaire. Préférentiellement, le volume occupé par l'élément filaire 1 représente au moins 50% du volume interne du au moins un premier élément tubulaire 2, plus préférentiellement au moins 70% et encore plus préférentiellement au moins 80%. Plus l'élément filaire 1 occupe un volume important à l'intérieur du au moins un premier élément tubulaire 2 et plus les différentes boucles de l'élément filaire 1 sont obligées de frotter les unes contre les autres ce qui permet de fixer la tenue mécanique de l'anneau formé par les boucles de l'élément filaire 1 lors de l'application d'un effort en traction. La tenue mécanique en traction est fournie par les tours de l'élément filaire 1 et non par le au moins un premier élément tubulaire 2.

En plus du au moins un premier élément tubulaire 2, le connecteur de dégaine comporte un élément tubulaire additionnel 5 qui forme une gaine additionnelle. L'élément tubulaire additionnel 5 est préférentiellement un élément intrinsèquement tubulaire, c'est-à-dire sans une étape de couture, soudure, collage ou autre. **Il** est préférable que l'élément tubulaire additionnel 5 soit choisi parmi une sangle tubulaire, c'est-à-dire un élément tissé tubulaire ou il peut s'agir d'une tresse tubulaire. Il est également possible de prévoir que l'élément tubulaire additionnel 5 soit un tricot tubulaire. Le choix de l'élément tubulaire additionnel 5 est indépendant du au moins un premier élément tubulaire 2.

Les deux brins du bobinage traversent l'élément tubulaire additionnel 5. L'élément tubulaire additionnel 5 entoure l'ensemble formé par le premier brin 3 et le deuxième brin 4 disposés adjacents selon une direction perpendiculaire à la direction longitudinale. Le bobinage s'échappe à chacune des deux extrémités de l'élément tubulaire additionnel 5 de sorte que le bobinage en élément filaire 1 associé à l'élément tubulaire additionnel 5 définissent un premier anneau 6 et un deuxième anneau 7. Les deux anneaux sont séparés par l'élément tubulaire additionnel 5. Le premier anneau 6 définit un premier trou traversant qui est destiné à recevoir un premier mousqueton et le deuxième anneau 7 définit un deuxième trou traversant qui est destiné à recevoir un deuxième mousqueton. Les deux mousquetons sont séparés par l'élément tubulaire additionnel 5.

Le au moins un premier élément tubulaire 2 entoure le bobinage d'élément filaire 1 le long du premier anneau 6 et le long du deuxième anneau 7 hors de la zone de recouvrement par la gaine additionnelle. La au moins une première gaine s'étend continument le long du premier anneau 6 pour former une gaine de premier anneau et s'étend continument le long du deuxième anneau 7 pour former une gaine de deuxième anneau. Chacune des deux extrémités de la gaine de premier anneau et de la gaine de deuxième anneau est au contact de la gaine additionnelle pour protéger le bobinage.

**Il** est particulièrement avantageux de fixer les extrémités de la gaine de premier anneau à une extrémité de l'élément tubulaire additionnel 5 par une fixation 8. La fixation 8 est préférentiellement une couture. **Il** est particulièrement avantageux de fixer les extrémités de la gaine de deuxième anneau à une autre extrémité de l'élément tubulaire additionnel 5.

**Il** est avantageux que l'élément tubulaire additionnel 5 soit uniquement fixé à le moins un premier élément tubulaire 2 aux extrémités qui définissent la gaine de premier anneau et la gaine de deuxième anneau ce qui permet une plus grande mobilité des tours du bobinage de l'élément filaire 1 dans l'éventuelle zone de recouvrement entre l'élément tubulaire additionnel 5 et le au moins un premier élément tubulaire 2. Cela permet de gagner en souplesse.

Pour gagner en souplesse et/ou en compacité, il est particulièrement avantageux que le au moins un premier élément tubulaire 2 ne recouvre pas tout le bobinage selon la direction longitudinale. **Il** est alors possible de définir une zone du bobinage qui est recouverte par le au moins un premier élément tubulaire 2 et une zone qui n'est pas recouverte par le au moins un premier élément tubulaire 2, c'est-à-dire une zone qui est en vis-à-vis direct avec l'élément tubulaire additionnel 5. La portion du bobinage non-recouverte par le premier élément tubulaire 2 est recouvertes par l'élément tubulaire additionnel 5,

La figure 2A illustre un mode de réalisation où le au moins un premier élément tubulaire 2 s'étend continument le long du bobinage de manière à recouvrir l'ensemble de la longueur du bobinage ou quasiment l'ensemble du bobinage. A l'intérieur du volume interne de l'élément tubulaire additionnel 5, on trouve le premier brin 3 et le deuxième brin 4 du bobinage ainsi qu'au moins une portion du au moins un premier élément tubulaire 2 qui entoure le bobinage autour du premier brin 3 et du deuxième brin 4. **Il** est alors nécessaire de choisir un élément tubulaire additionnel 5 de grand diamètre pour recevoir tous ces éléments comme cela est illustré à la figure 2B. plus le diamètre est important et plus l'encombrement du connecteur de dégaine est important. Plus le diamètre est faible et plus les tours d'élément filaire 1 sont coincés ce qui limite la souplesse et qui rend plus compliqué la fabrication du connecteur de dégaine.

Les figures 3A et 4A illustrent un mode de réalisation où le au moins un premier élément tubulaire 2 s'étend uniquement partiellement le long du bobinage de manière à recouvrir l'ensemble de la longueur du bobinage du premier brin 3 et de chacune des portions du bobinage en saillie de l'élément tubulaire additionnel 5 et destinées à former le premier anneau 6 et le deuxième anneau 7. Le reste du deuxième brin 4 n'est pas recouvert. A l'intérieur du volume interne de l'élément tubulaire additionnel 5, on trouve le premier brin 3 et le deuxième brin 4 du bobinage ainsi que la partie 2a du au moins un premier élément tubulaire 2 qui recouvre le premier brin 3 et les extrémités de la gaine de premier anneau et de la gaine de deuxième anneau. Il est alors possible de choisir un élément tubulaire additionnel 5 de moins grande dimension pour recevoir tous ces éléments car une partie du premier élément tubulaire 2 a été supprimé en comparaison du mode de réalisation précédent. Avantageusement, il n'y a qu'un seul premier élément tubulaire 2 qui s'étend continument pour former la gaine de premier anneau et la gaine de deuxième anneau.

La figure 1A, illustre un mode de réalisation où le au moins un premier élément tubulaire 2 recouvre les premiers tours d'élément filaire 1 le long du premier anneau 6 pour former la gaine de premier anneau et recouvre les premiers tours d'élément filaire 1 le long du deuxième anneau 7 pour former la gaine de deuxième anneau. Les deux portions destinées à former la gaine de premier anneau et la gaine de deuxième anneau sont distinctes et espacées l'une de l'autre. Le premier élément tubulaire 2 possède deux parties distinctes avec un premier élément tubulaire principal 2' et un premier élément tubulaire secondaire 2" distinct du premier élément tubulaire principal 2'. Le premier élément tubulaire principal 2' est séparé du premier élément tubulaire secondaire 2" par deux zones non-recouvertes qui s'étendent respectivement le long du premier brin 3 et du deuxième brin 4. Entre le premier anneau 6 et le deuxième anneau 7, le bobinage est dépourvu de premier élément tubulaire 2 recouvrant continument le premier brin 3 et continument le deuxième brin 4.

Il est particulièrement avantageux que le premier élément tubulaire principal 2' et le premier élément tubulaire secondaire 2" s'étendent jusqu'aux fixations 8 qui fixent le premier élément tubulaire 2 avec l'élément tubulaire additionnel 5. Il est avantageux que le premier élément tubulaire 2 ne s'étendent pas au-delà des fixations 8 selon la direction qui relie le premier élément tubulaire principal 2' et le premier élément tubulaire secondaire 2". Par ne s'étend pas au-delà des fixations 8, on entend que le premier élément tubulaire 2 ne s'étendent pas trop loin à partir des fixations 8. Le premier élément tubulaire 2 s'étend assez au-delà des fixations 8 pour éviter la dégradation de la fixation 8. Il en va avantageusement de même pour l'élément tubulaire additionnel 5 dans la direction opposée.

A l'intérieur du volume interne de l'élément tubulaire additionnel 5, on trouve le premier brin 3 et le deuxième brin 4 du bobinage ainsi que les extrémités de la gaine de premier anneau et de la gaine de deuxième anneau. Le bobinage étant quasiment dépourvu de premier élément tubulaire 2 sous l'élément tubulaire additionnel 5, il est alors possible de choisir un élément tubulaire additionnel 5 de moins grand diamètre pour recevoir tous ces éléments. Moins le premier élément tubulaire 2 s'étend profondément à l'intérieur de l'élément tubulaire additionnel 5 selon le premier brin 3 et selon le deuxième brin 4 et plus il est possible de choisir un élément tubulaire additionnel 5 de faible diamètre. La réduction du diamètre de l'élément tubulaire additionnel 5 permet d'améliorer sa compacité et l'absence de premier élément tubulaire 2 permet d'avoir une plus grande liberté de mouvement des tours d'élément filaire 1 ce qui améliore la souplesse.

Il est particulièrement avantageux que les tours d'élément filaire 1 représentent au moins 50% du volume interne de l'élément tubulaire additionnel 5, plus préférentiellement au moins 70% voire au moins 80%.

Dans une alternative de réalisation où en complément et comme cela est illustré à la figure 4A, on souhaite avoir un seul premier élément tubulaire 2 qui s'étend le long du premier brin 3 et le long du deuxième brin 4 et à l'intérieur de l'élément tubulaire additionnel 5. Afin de pouvoir diminuer le diamètre de l'élément tubulaire additionnel 5, le au moins un premier élément tubulaire 2 présente un volume moindre par longueur de bobinage en comparaison de ce qui est illustré à la figure 2. Il est avantageux d'avoir un premier élément tubulaire 2 qui possède une première portion présentant un volume moindre qu'une deuxième portion définissant la gaine de premier anneau et qu'une troisième portion définissant la gaine de deuxième anneau. La première portion est disposée entre le bobinage et l'élément tubulaire additionnel 5. Le volume est mesuré pour une longueur donnée de portion. Dans une alternative de réalisation, le premier élément tubulaire 2 possède une première portion présentant un compression plus importante qu'une deuxième portion définissant la gaine de premier anneau et qu'une troisième portion définissant la gaine de deuxième anneau. La première portion est disposée entre le bobinage et l'élément tubulaire additionnel 5. La compression est mesurée en réponse à un effort donné.

Il est avantageux de prévoir que le premier élément tubulaire 2 présente un motif d'enchevêtrement entre les fils et/ou fibres qui forment l'élément tubulaire additionnel 5 qui est variable selon la direction longitudinale de l'élément tubulaire additionnel 5 qui correspond à la direction longitudinale du bobinage. Le premier élément tubulaire 2 présente un premier d'enchevêtrement qui est différent d'un deuxième motif d'enchevêtrement. Le premier motif d'enchevêtrement est destiné à former la gaine de premier anneau et/ou la gaine de deuxième anneau. Le deuxième motif d'enchevêtrement est destiné à se situer à l'intérieur de l'élément tubulaire additionnel 5. Le deuxième motif d'enchevêtrement présente un volume qui est moins important que le premier motif d'enchevêtrement pour une longueur donnée. L'encombrement correspond à un volume de fils ou fibres utilisés par longueur donnée de premier élément tubulaire 2. Une différenciation du motif d'enchevêtrement peut être une différenciation du motif de tissage, une différenciation du motif de tressage, une différenciation du motif de tricotage, une modification du nombre de fils utilisés ou de la section des fils utilisés.

Par exemple, il est avantageux de garder un lien mécanique entre la portion de premier élément tubulaire 2 destinée à former la gaine de premier anneau et la portion de premier élément tubulaire 2 destinée à former la gaine de deuxième anneau afin de mieux contrôler les positions des différentes portions du premier élément tubulaire 2 lors de la fabrication du connecteur de dégaine. Préférentiellement et comme illustré sur les différentes figures, le premier élément tubulaire 2 s'étend continument du premier anneau jusqu'au deuxième anneau pour faciliter la position de la gaine de premier anneau et de la gaine de deuxième anneau durant la fabrication avant de réaliser la fixation.

La figure 4 illustre un mode de réalisation où le premier élément tubulaire 2 possède une première portion 2a qui possède un premier motif d'enchevêtrement et une deuxième portion 2b qui possède un deuxième motif d'enchevêtrement. La première portion 2a avec le premier motif d'enchevêtrement est destiné à former la gaine de premier anneau et/ou la gaine de deuxième anneau. La deuxième portion 2b avec le deuxième motif d'enchevêtrement est destiné à se trouver à l'intérieur de l'élément tubulaire additionnel 5.

Dans le mode de réalisation illustré à la figure 5, le premier élément tubulaire 2 possède une portion destinée à former la gaine de premier anneau, une portion destinée à former la gaine de deuxième anneau ainsi qu'une portion additionnelle destinée à former le lien mécanique entre la gaine de premier anneau et la gaine de deuxième anneau. La portion additionnelle peut définir un lien sécable qui cède facilement durant la fabrication du connecteur de dégaine. Cela permet d'avoir un seul premier élément tubulaire 2 qui se scinde en deux. Cet élément tubulaire unique est préférable lors d'une étape de bobinage où l'élément filaire 1 traverse le centre du premier élément tubulaire 2 pour former le bobinage. Une fois le bobinage formé, les deux parties du premier élément tubulaire 2 peuvent être dissociées. La portion sécable peut être formée par un motif d'enchevêtrement différent des motifs d'enchevêtrement destinés à former la gaine de premier anneau et la gaine de deuxième anneau ou il s'agit du même motif d'enchevêtrement qui est fragilisé par une opération technologique additionnelle, par exemple une découpe laser ou manuelle, l'application d'un acide, d'une base ou d'un dissolvant ou encore l'application d'un rayonnement électromagnétique. La séparation de la gaine de premier anneau et de la gaine de deuxième anneau peut être obtenue par tirage car la zone sécable cède préférentiellement par rapport à la gaine de premier anneau et à la gaine de deuxième anneau. Par exemple, la séparation de la gaine de premier anneau et de la gaine de deuxième anneau peut intervenir après la fixation du premier élément tubulaire 2 avec une première extrémité de l'élément tubulaire additionnel 5 pour former la gaine de premier anneau et avant de fixer le premier élément tubulaire 2 avec la deuxième extrémité de l'élément tubulaire additionnel 5 pour former la gaine de deuxième anneau. Suite à la séparation, la gaine de premier anneau et la gaine de deuxième anneau possèdent deux fronts de découpe qui sont complémentaires. Les fronts de découpe appartiennent préférentiellement à un motif d'enchevêtrement qui est différent du motif d'enchevêtrement qui définit la gaine de premier anneau et la gaine de deuxième anneau. Le motif d'enchevêtrement définissant la zone sécable présente préférentiellement un volume moins important que le motif d'enchevêtrement qui définit la gaine de premier anneau et la gaine de deuxième anneau pour une longueur donnée et/ou il présente une plus grande compression en réponse à un effort donné. La longueur est mesurée selon la direction longitudinale de l'élément filaire. L'effort est appliqué perpendiculaire à la direction longitudinale de l'élément filaire.

La longueur du bobinage est mesurée suivant la direction longitudinale de l'élément filaire 1. Si le bobinage se présente sous la forme d'un cercle, la longueur du bobinage correspond au périmètre du cercle.

De préférence, chaque extrémité du au moins un premier élément tubulaire 2 possède une portion recouverte par l'élément tubulaire additionnel 5 pour éviter d'avoir l'élément filaire 1 à nu.

L'élément filaire 1 s'étendant continument d'une extrémité à l'autre du connecteur de dégaine en définissant le premier anneau 6 et le deuxième anneau 7, il permet d'assurer la continuité mécanique entre les deux anneaux lorsque le connecteur de dégaine est soumis à un effort en traction. La continuité mécanique assurée par le bobinage d'élément filaire 1 comporte plusieurs tours qui sont mobiles les uns par rapport aux autres ce qui facilite l'obtention d'un connecteur de dégaine présentant un meilleur compromis entre son poids, sa souplesse et sa compacité.

Le au moins un premier élément tubulaire 2 et l'élément tubulaire additionnel 5 entourent le bobinage d'élément filaire 1 ce qui limite les déplacements des différents tours les uns par rapport aux autres. Cela permet au bobinage d'élément filaire 1 de fournir les performances mécaniques attendues en traction tout en autorisant une bonne souplesse dans les autres directions. Avantageusement, l'élément tubulaire additionnel 5 est rempli au moins à 30%. Le remplissage s'observant selon un plan de coupe qui est perpendiculaire à la direction longitudinale du premier brin 3 et à la direction longitudinale du deuxième brin 4. Le cas échéant, les tours d'élément filaire 1 représentent au moins 30% du premier élément tubulaire 2 dans la gaine de premier anneau, dans la gaine de deuxième anneau et plus préférentiellement dans chaque position du premier élément tubulaire 2.

Ce mode de réalisation est particulièrement avantageux en comparaison à une sangle car il permet un meilleur compromis entre une résistance à la traction selon la direction longitudinale et une souplesse dans les autres directions pour une compacité donnée.

Le connecteur de dégaine peut être fabriqué de la manière suivante. Le procédé de fabrication d'un connecteur de dégaine comporte une étape de fourniture d'un élément filaire 1, au moins un premier élément tubulaire 2 et un élément tubulaire additionnel 5. Ensuite, on bobine, l'élément filaire 1 pour former des premiers tours dudit élément filaire 1. L'élément filaire 1 passe à travers une portion centrale du au moins un premier élément tubulaire 2 à chaque tour pour que le au moins un premier élément tubulaire 2 forme au moins une première gaine autour des premiers tours de l'élément filaire 1. On installe les premiers tours d'élément filaire 1, c'est-à-dire le bobinage, dans l'élément tubulaire additionnel 5. L'élément tubulaire additionnel 5 recouvre partiellement le bobinage pour définir un premier anneau 6 destiné à recevoir un premier mousqueton et un deuxième anneau 7 destiné à recevoir un deuxième mousqueton. Le deuxième anneau 7 est séparé du premier anneau 6 par l'élément tubulaire additionnel 5. **Il** est particulièrement avantageux que la au moins une première gaine entoure les premiers tours depuis l'élément tubulaire additionnel 5 jusqu'à l'élément tubulaire additionnel 5 le long du premier anneau 6 et du deuxième anneau 7.

Préférentiellement, on fixe le premier élément tubulaire 2 à une première extrémité de l'élément tubulaire additionnel 5 et à une deuxième extrémité de l'élément tubulaire additionnel 5. Le premier élément tubulaire 2 entoure les premiers tours depuis l'élément tubulaire additionnel 5 jusqu'à l'élément tubulaire additionnel 5 le long du premier anneau 6 pour former une gaine de premier anneau et le long du deuxième anneau 7 pour former une gaine de deuxième anneau.

Dans le mode de réalisation illustré aux figures 2, 3 et 4, le premier élément tubulaire 2 s'étend continument du premier anneau 6 jusqu'au deuxième anneau 7 avant de fixer le premier élément tubulaire aux deux extrémités de l'élément tubulaire additionnel 5. Dans le mode de réalisation illustré à la figure 4, après avoir fixé le premier élément tubulaire 2 aux deux extrémités de l'élément tubulaire additionnel 5, le premier élément tubulaire 2 s'étend continument du premier anneau 6 jusqu'au deuxième anneau 7. Le premier élément tubulaire 2 possède un premier motif d'enchevêtrement formant la gaine de premier anneau qui est différent d'un deuxième motif d'enchevêtrement disposé entre le bobinage et l'élément tubulaire additionnel 5.

De manière préférentielle, le au moins un premier élément tubulaire 2 comporte un premier élément tubulaire principal 2' et un premier élément tubulaire secondaire 2" distinct du premier élément tubulaire principal 2'. Durant bobiner l'élément filaire 1 pour former les premiers tours, ledit élément filaire 1, passe à travers le premier élément tubulaire principal 2' et le premier élément tubulaire secondaire 2". Le premier élément tubulaire principal 2' recouvre les premiers tours le long du premier anneau 6 et le premier élément tubulaire secondaire 2" recouvre les premiers tours le long du deuxième anneau 7.

Avantageusement comme illustré à la figure 5A, le au moins un premier élément tubulaire 2 comporte un premier élément tubulaire principal 2' et un premier élément tubulaire secondaire 2" relié au premier élément tubulaire principal 2' par une portion sécable 2c. Après avoir bobiné l'élément filaire 1 pour former les premiers tours, le premier élément tubulaire principal 2' est séparé du premier élément tubulaire secondaire 2". Le premier élément tubulaire principal 2' recouvre les premiers tours le long du premier anneau 6 et le premier élément tubulaire secondaire 2" recouvre les premiers tours le long du deuxième anneau 7. Il est avantageux que le premier élément tubulaire 2 soit plus long que l'élément tubulaire additionnel 5 afin de faciliter la préhension de chacune des deux extrémités du premier élément tubulaire 2 pour appliquer un effort en traction qui fait céder la portion sécable 2c.

Dans un mode de réalisation particulier illustré à la figure 7, le premier élément tubulaire 2 est assez long pour former la gaine de premier anneau et s'échapper de la deuxième extrémité de l'élément tubulaire additionnel 5 (figure 7B). Cela permet d'installer le premier élément tubulaire 2 de manière à former efficacement la gaine de premier anneau puis de fixer une ou les deux extrémités de la gaine de premier anneau avec l'élément tubulaire additionnel 5. Une fois la fixation réalisée, il est possible de faire céder la partie sécable afin que le premier élément tubulaire secondaire 2' soit déplacer pour former la gaine de deuxième anneau puis que les deux extrémités de la gaine de deuxième anneau soient fixées à l'élément tubulaire additionnel 5 (figure 7C).

La figure 1B illustre une étape de réalisation où le premier élément tubulaire 2 est disposé au-delà de l'élément tubulaire additionnel 5 pour préparer la formation de la gaine de premier anneau et la gaine de deuxième anneau. Ce mode de réalisation n'est pas avantageux car il est préférable d'installer les extrémités des premiers éléments tubulaires 2 dans l'élément tubulaire additionnel 5. **Il** est particulièrement avantageux de maintenir les extrémités d'au moins une des gaines de premier anneau et de deuxième anneau dans la gaine additionnelle et de réaliser la fixation 8 avant de finaliser la formation de l'autre de la gaine de premier anneau et de la gaine de deuxième anneau.

Comme cela est illustré à la figure 6, une dégaine est formée en installant un mousqueton 9 dans le premier anneau 6 et un autre mousqueton 9 dans le deuxième anneau 7.

L'élément filaire est préférentiellement un élément filaire statique ou quasi-statique, c'est-à-dire présentant un allongement à la rupture inférieur à 10% ou inférieur à 4%.

## Revendications

1. Connecteur de dégaine comportant :
- un bobinage d'un élément filaire (1) comportant des premiers tours dudit élément filaire (1), le bobinage étant divisé en un premier brin (3) et un deuxième brin (4) disposés consécutivement selon une direction longitudinale de l'élément filaire (1) ;
- au moins un premier élément tubulaire (2) entourant lesdits premiers tours pour former au moins une première gaine autour du bobinage, ledit au moins un premier élément tubulaire (2) étant traversé par les premiers tours et s'étendant selon une direction longitudinale de l'élément filaire (1) ;
- un élément tubulaire additionnel (5) disposé autour du bobinage pour former une gaine additionnelle, l'élément tubulaire additionnel (5) entourant l'ensemble formé par le premier brin (3) et le deuxième brin (4) disposés adjacents selon une direction perpendiculaire à la direction longitudinale ;
dans lequel le bobinage s'échappe à chacune des deux extrémités opposées de l'élément tubulaire additionnel (5) pour définir un premier anneau (6) avec un premier trou traversant destiné à recevoir un premier mousqueton et un deuxième anneau (7) avec un deuxième trou traversant destiné à recevoir un deuxième mousqueton, le deuxième anneau (7) étant séparé du premier anneau par l'élément tubulaire additionnel (5) ;
dans lequel ledit au moins un premier élément tubulaire (2) entoure continument le bobinage le long du premier anneau (6) et du deuxième anneau (7) pour définir une gaine de premier anneau et une gaine de deuxième anneau, chaque extrémité de la gaine de premier anneau et de la gaine de deuxième anneau étant au contact de l'élément tubulaire additionnel (5) ;
**caractérisé en ce que** ledit au moins un premier élément tubulaire (2) s'étend continument du premier anneau (6) jusqu'au deuxième anneau (7) ou **en ce que** la gaine de premier anneau et la gaine de deuxième anneau sont séparées par une portion du bobinage non-recouverte par ledit au moins un premier élément tubulaire (2) le long du premier brin (3) et une portion non-recouverte par ledit au moins un premier élément tubulaire (2) le long du deuxième brin (4), les portions du bobinage non-recouvertes par ledit au moins un premier élément tubulaire (2) étant recouvertes par l'élément tubulaire additionnel (5), la gaine de premier anneau possédant un front de découpe qui est complémentaire d'un front de découpe de la gaine de deuxième anneau, les fronts de découpe appartenant à un deuxième motif d'enchevêtrement du au moins un premier élément tubulaire (2) qui est différent d'un premier motif d'enchevêtrement du au moins un premier élément tubulaire (2) formant la gaine de premier anneau.

2. Connecteur de dégaine selon la revendication 1 dans lequel ledit au moins un premier élément tubulaire (2) s'étend continument du premier anneau (6) jusqu'au deuxième anneau (7).

3. Connecteur de dégaine selon la revendication 2 dans lequel le premier élément tubulaire (2) possède une première portion présentant un volume moindre qu'une deuxième portion définissant la gaine de premier anneau et qu'une troisième portion définissant la gaine de deuxième anneau, la première portion étant disposée entre le bobinage et l'élément tubulaire additionnel (5), le volume étant mesuré pour une longueur donnée de portion.

4. Connecteur de dégaine selon la revendication 2 dans lequel le premier élément tubulaire (2) possède une première portion présentant une compression plus importante qu'une deuxième portion définissant la gaine de premier anneau et qu'une troisième portion définissant la gaine de deuxième anneau, la première portion étant disposée entre le bobinage et l'élément tubulaire additionnel (5), la compression étant mesurée en réponse à un effort donné.

5. Connecteur de dégaine selon l'une quelconque des revendications 2 à 4 dans lequel ledit au moins un premier élément tubulaire (2) possède un premier motif d'enchevêtrement formant la gaine de premier anneau qui est différent d'un deuxième motif d'enchevêtrement disposé entre le bobinage et l'élément tubulaire additionnel (5).

6. Connecteur de dégaine selon la revendication 1 dans lequel la gaine de premier anneau et la gaine de deuxième anneau sont séparées par la portion non-recouverte par ledit au moins un premier élément tubulaire (2) le long du premier brin (3) et la portion non-recouverte par ledit au moins un premier élément tubulaire (2) le long du deuxième brin (4).

7. Connecteur de dégaine selon la revendication 6 dans lequel le deuxième motif d'enchevêtrement présente un volume moindre que le premier motif d'enchevêtrement pour une longueur donnée et/ou le deuxième motif d'enchevêtrement présente une plus grande compression que le premier motif d'enchevêtrement en réponse à un effort donné.

8. Connecteur de dégaine selon l'une quelconque des revendications 1 à 7 dans lequel le au moins un premier élément tubulaire (2) est fixé à l'élément tubulaire additionnel (5) par des coutures.

9. Dégaine comportant un connecteur de dégaine selon l'une quelconque des revendications précédentes et comportant un premier mousqueton installé dans le premier anneau (6) et un deuxième mousqueton installé dans le deuxième anneau (7).

10. Procédé de fabrication d'un connecteur de dégaine comportant les étapes suivantes :
- fournir un élément filaire (1), un premier élément tubulaire (2) et un élément tubulaire additionnel (5) ;
- bobiner l'élément filaire (1) pour former des premiers tours dudit élément filaire (1), l'élément filaire (1) passant à travers une portion centrale du premier élément tubulaire (2) à chaque tour pour que le premier élément tubulaire (2) forme au moins une première gaine autour des premiers tours de l'élément filaire (1) ;
- installer le bobinage d'élément filaire (1) dans l'élément tubulaire additionnel (5), le bobinage s'échappant à chacune des extrémités de l'élément tubulaire additionnel (5) pour définir un premier anneau (6) destiné à recevoir un premier mousqueton et un deuxième anneau (7) destiné à recevoir un deuxième mousqueton, le deuxième anneau (7) étant séparé du premier anneau (6) par l'élément tubulaire additionnel (5),
- fixer le premier élément tubulaire (2) à une première extrémité de l'élément tubulaire additionnel (5) et à un deuxième extrémité de l'élément tubulaire additionnel (5), le premier élément tubulaire (2) entourant les premiers tours depuis l'élément tubulaire additionnel (5) jusqu'à l'élément tubulaire additionnel (5) le long du premier anneau (6) pour former une gaine de premier anneau et le long du deuxième anneau (7) pour former une gaine de deuxième anneau ; dans lequel le premier élément tubulaire (2) s'étend continument du premier anneau (6) jusqu'au deuxième anneau (7) avant de fixer le premier élément tubulaire aux deux extrémités de l'élément tubulaire additionnel (5).

11. Procédé de fabrication d'un connecteur de dégaine selon la revendication 10 dans lequel après avoir fixé le premier élément tubulaire (2) aux deux extrémités de l'élément tubulaire additionnel (5), le premier élément tubulaire (2) s'étend continument du premier anneau (6) jusqu'au deuxième anneau (7) et dans lequel le premier élément tubulaire (2) possède un premier motif d'enchevêtrement formant la gaine de premier anneau qui est différent d'un deuxième motif d'enchevêtrement disposé entre le bobinage et l'élément tubulaire additionnel (5).

12. Procédé de fabrication d'un connecteur de dégaine selon la revendication 10 dans lequel le premier élément tubulaire (2) comporte un premier élément tubulaire principal (2') et un premier élément tubulaire secondaire (2") relié au premier élément tubulaire principal (2') par une portion sécable, dans lequel après avoir bobiné l'élément filaire (1) pour former les premiers tours et avant de fixer le premier élément tubulaire (2) aux deux extrémités de l'élément tubulaire additionnel (5), le premier élément tubulaire principal (2') est séparé du premier élément tubulaire secondaire (2") et dans lequel le premier élément tubulaire principal (2') recouvre les premiers tours le long du premier anneau (6) et le premier élément tubulaire secondaire (2") recouvre les premiers tours le long du deuxième anneau (7).

13. Procédé de fabrication d'un connecteur de dégaine selon la revendication 12 dans lequel le premier élément tubulaire principal (2') est séparé du premier élément tubulaire secondaire (2") après avoir fixé le premier élément tubulaire (2) avec la première extrémité de l'élément tubulaire additionnel (5) et avant de fixer le premier élément tubulaire (2) avec la deuxième extrémité de l'élément tubulaire additionnel (5).

14. Procédé de fabrication d'un connecteur de dégaine selon l'une des revendications 12 et 13 dans lequel le premier élément tubulaire principal (2') est séparé du premier élément tubulaire secondaire (2") en tirant sur la portion sécable.
